# EUROPEAN PATENT SPECIFICATION

(11) **EP 1 435 188 B1**
(45) Date of publication and mention of the grant of the patent: **20.12.2006**
(21) Application number: 01976648.4
(22) Date of filing: 12.10.2001
(51) Int. Cl.: H04Q 7/38

(54) **METHOD FOR RETAINING SUBSCRIBER DATA CONTAINED IN MSC/VLR AFTER SYSTEM RESTART**
VERFAHREN ZUR ERHALTUNG VON IN EINEM MSC/VLR ENTHALTENEN NUTZERDATEN NACH EINEM WIEDERANLAUF DES SYSTEMS
PROCEDE DE CONSERVATION DE DONNEES D'ABONNES CONTENUES DANS UN MSC/VLR APRES UN REDEMARRAGE DU SYSTEME

(43) Date of publication of application: 07.07.2004
(73) Proprietor: TELEFONAKTIEBOLAGET LM ERICSSON (publ), 164 83 Stockholm (SE)
(72) Inventor: QUARANTA, Isidoro, I-84014 Nocera Inferiore (IT)
(74) Representative: Tonscheidt, Andreas
(86) International application number: PCT/IT2001/000519
(87) International publication number: WO 2003/039186

(56) References cited:
- WO-A-99/56492
- US-A- 5 509 118
- US-A- 5 901 353
- US-A- 6 067 454

## Description

The present invention relates to the field of cellular telecommunication and concerns a method for retaining subscriber data contained in the Visitor Location Register (VLR) of Mobile Services Switching Centers (MSC) after a system restart.

The Mobile Services Switching Center (MSC) is responsible for all switching functions related to call processing. The Visitor Location Register (VLR) is a data base used to manage mobile subscribers. The VLR stores subscriber information currently located in the related MSC service area. MSC and VLR may be implemented in one single unit. For this reason in the following it will be referred as MSC/VLR.

It is known that, in the considered field, a serious software error leads to a system restart in which all calls are disconnected. The network data is not valid anymore (it could be the cause of the error) and so it must be reloaded.

It is also known that the function of retaining VLR data in an MSC/VLR or in a VLR standing alone after a system restart is usually performed by monitoring and marking suspected subscriber data. After a system restart, if the subscriber data is marked as suspected, all VLR data is cleared. Otherwise, the VLR data is retained.

US-A-5 901 353 discloses a system wherein VLR data is maintained during system restart. For each visiting subscriber a virtual registration request, i.e records that went thru the restart, is issued to HLR.

The procedure consists of two stages, according to which: VLR data is marked as valid if none of the activities, such as modification and reading of subscriber data in the MSC/VLR (or in the VLR standing alone), is interrupted by a system restart; and, after the system is recovered from a system restart, if the VLR data is marked as valid, it is retained; otherwise all VLR data is cleared.

The object of the present invention is to reduce the load due to massive updating of subscriber data, with a consequent reduction in signalling between the VLR and the Home Location Register (HLR). As a result of this improvement the subscribers will get their services in a short time and the congestion created by the updating of subscriber data or the overload of an undersized network will be greatly reduced.

In a switch with a high level of traffic, the subscriber data is marked as suspected due to modification/accessing taking place continuously, albeit for short periods of time. That means that if a system restart happens during any of these very regular occasions, all subscriber data will be removed. So, in suchlike switch and in most cases, subscriber data will not be retained and MSC/VLR will be forced to do a massive updating of subscriber data, with all the related problems, such as congestion and overload. As currently implemented, the feature will permit to retain the subscriber data only if none of the activities such as modification or accessing of subscriber data will be interrupted by a system restart. It is enough having just one suspected subscriber data record to remove all subscriber data and forcing MSC/VLR to do a massive updating of all subscriber data. It is rare for a switch with a high level of traffic not to perform modification or accessing of subscriber data, so, in this case, it could happen that subscriber data will never be retained. The subscriber could be bothered and the system could not work as described.

In order to overcome these problems, the present invention provides that only the suspected subscriber data records are removed on a system restart, all the other valid subscriber data being retained.

More precisely, the present invention relates to a method, to be implemented in a Mobile Services Switching Center (MSC), with Visitor Location Register (VLR) containing subscriber profile data, for retaining said subscriber data after a system restart, characterized in that those subscriber data records for which an activity (modification or reading) is in progress (suspected data records), are distinguished from the other data records, and in that, after the system restart, only the suspected subscriber data records are removed from the MSC/VLR, while retaining all the other valid data records.

In a first embodiment, in the method according to the invention, in order to distinguish the suspected subscriber data records, possibly to be removed, from the other data records:
- a marking procedure is performed on all subscriber data records for which an activity (modification or reading) is in progress;
- said marking is removed when said activity is completed;
- in case a system restart takes place during said activity, the marked data records (i.e. suspected) are detected through scanning;
- and the possibly removed data records are then stored again in the MSC/VLR.

In a second embodiment, in the method according to the invention, in order to distinguish the suspected subscriber data records from the other data records, possibly to be removed:
- all the subscriber data records, for which an activity (modification or reading) is in progress, are grouped in an additional file;
- said data records are removed from said additional file when said activity on said data is completed;
- if a system restart takes place during said activity, all the data records in the additional file (i.e. suspected) are removed from the MSC/VLR;
- and the possibly removed data records are then stored again in the MSC/VLR.

The two above mentioned embodiments of the invention will be described in the following in more detail, referring to the enclosed drawings in which:
Fig. 1 is the flow chart of the Retaining now currently in use; and
Figs. 2 and 3 are the flow charts of the Retaining according to the first and respectively the second embodiment of the invention.

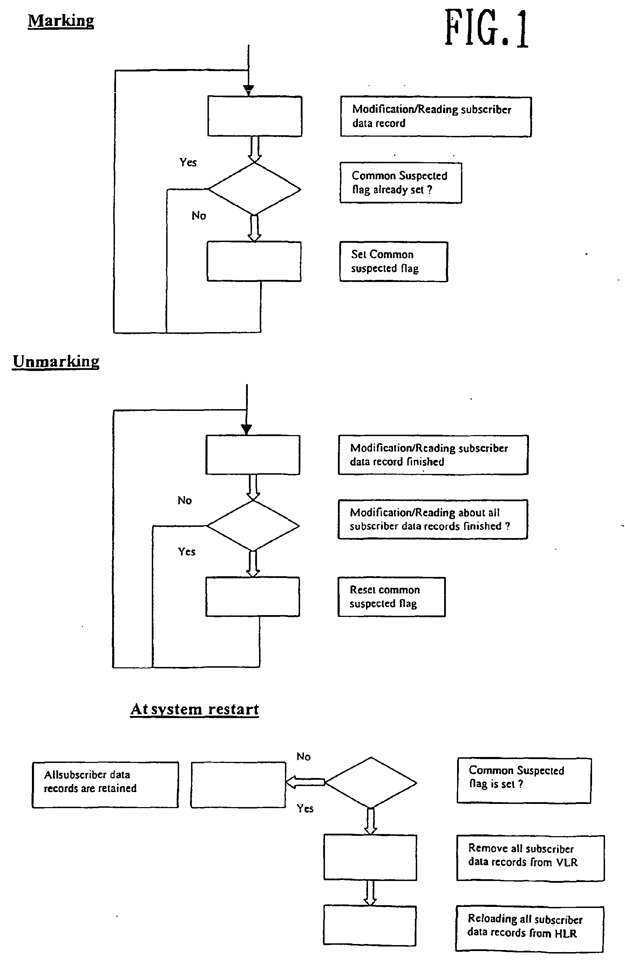

As shown in Fig. 1, the current Retaining uses one common flag (common suspected flag) to indicate that at least one subscriber data record is under modification/reading. If more than one subscriber data record is under modification/reading the same common suspected flag is kept set. Only if there are no subscriber data record under modification/reading this common suspected flag is reset.

In case of system restart, if the common suspected flag is set, then all the subscriber data records will be removed and after that reloaded. In that case no retaining will be performed.

For removing this problem, the first embodiment of the method according to the invention, whenever the following activities start, modification of subscriber data recorded in the MSC/VLR and accessing of subscriber data record in the MSC/VLR, each subscriber related data record is marked as suspected. As soon as the activity related to that subscriber data record is terminated, then it can be unmarked.

If a system restart occurs, a scanning is done, if the feature is activated, in order to check which subscriber needs an updating of its own data, as the current data are suspected. For each subscriber data record marked as suspected, the MSC/VLR starts the subscriber data updating procedure. All the other valid subscriber data records will thus be retained.

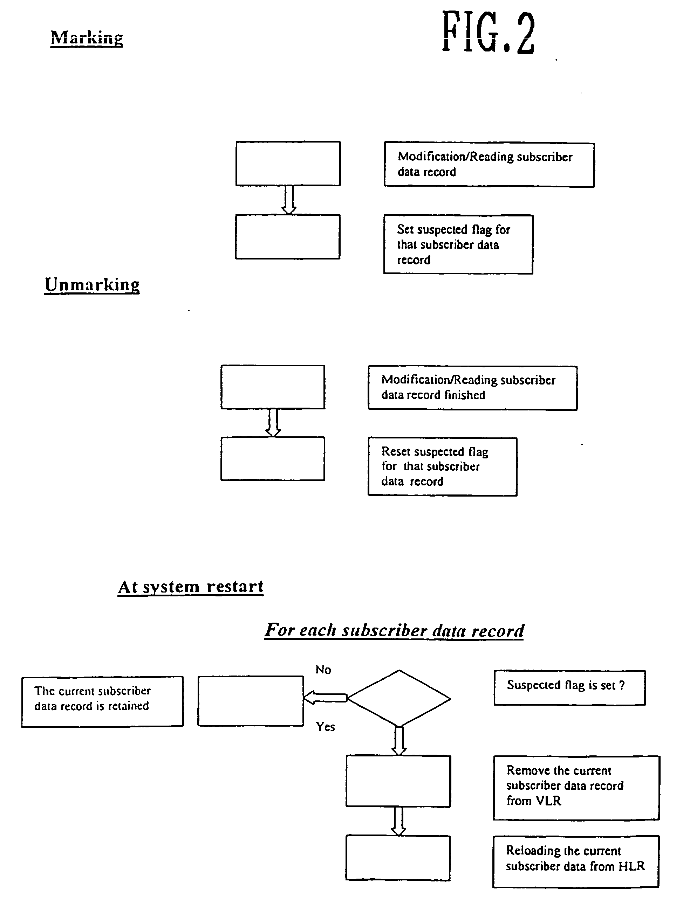

As shown in Fig. 2, this first embodiment uses a flag (suspected flag) for each subscriber.

The suspected flag for a subscriber data record is set whenever a subscriber data record is under modification/reading. The suspected flag for a subscriber data record is reset whenever a subscriber data record is not under modification/reading anymore.

In case of system restart, the VLR will check for each subscriber data record the suspected flag (scanning). Each subscriber data record with the suspected flag set will be removed and then reloaded from HLR. The other subscriber data records where the suspected flag is not set will be retained.

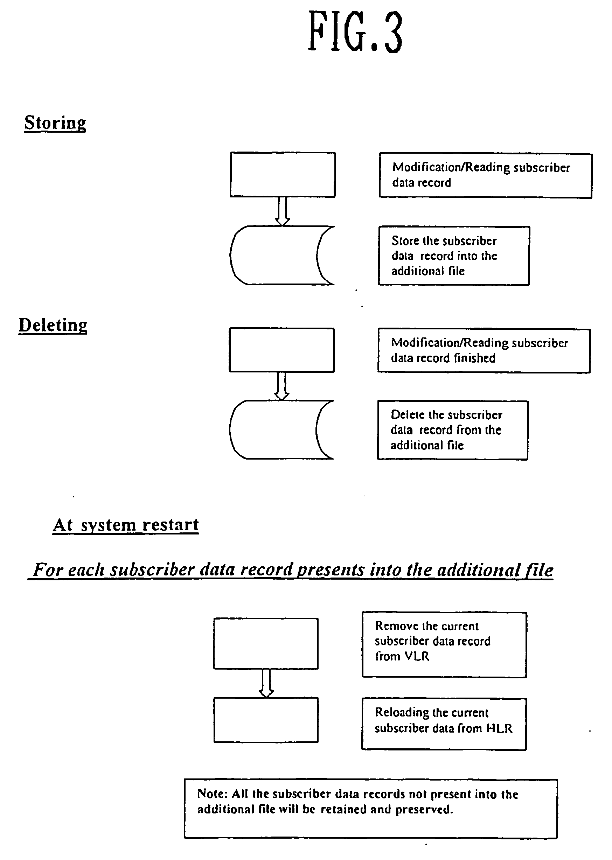

Alternatively, in the second embodiment of the invention, to implement the complete retaining of VLR data after a system restart, a list is built of suspected subscriber data records. In this case, it can be avoided to scan all the subscriber data records in the VLR and the subscriber data updating procedure can be started for each subscriber contained in such list. As shown in Fig. 3, this second embodiment of the invention uses an additional file to store the subscriber data records that may be corrupted. Whenever a subscriber data record is under modification/reading the subscriber data record will be stored into the additional file. Whenever a subscriber data record is not under modification/reading anymore it will be deleted from the additional file. In case of system restart, all the subscriber data records stored into the additional file (potentially corrupted) will be removed from the VLR and after that reloaded from HLR. For sure, the subscriber data records only present in the main file of the VLR and not into the additional file will be retained and preserved. Moreover, it could be enough to mark as suspected just the subscriber data records under modification, since the only accessing (reading) of subscriber data should not lead to suspected data. That means a further reduction of the number of subscriber data records marked as suspected.

The delay introduced by the scanning in the VLR of the subscriber data record can be considered with lower priority than the time needed for the massive updating of the data of all the subscribers with the related problems, such as congestion and overload. Anyway, the alternative implementation, corresponding to the second embodiment of the invention, could avoid the delay introduced by the scanning.

Since, with the method according to the invention, only the suspected subscriber data records will be removed and only for them the MSC/VLR will start a subscriber data updating procedure after a system restart, the complete retaining of VLR data after a system restart will actually contribute to save MSC/VLR processor capacity and the consequent reduction in signalling, with a considerable advantage over the state of the art. Moreover, the MSC/VLR (or the VLR standing alone) will be able to start processing calls in a shorter time after an MSC/VLR system restart.

The method according to the invention is provided both for GSM and UMTS access as well as for GPRS.

The invention comprises also a computer program loadable on a memory adapted to perform the steps of the method described above.

## Claims

1. Method, to be implemented in a Visitor Location Register containing subscriber profile data, for retaining said subscriber data after a system restart, **characterized in that** subscriber data records for which an activity (modification or reading) is in progress (suspected data records), are distinguished from other data records, and **in that**, after the system restart, only the suspected subscriber data records are removed from the Visitor Location Register, while retaining all the other valid data records.

2. Method according to claim 1, in which, in order to distinguish the suspected subscriber data records, which are possibly to be removed, from the other data records:
• a marking procedure is performed on all subscriber data records for which an activity (modification or reading) is in progress;
• said marking is removed when said activity is completed.

3. Method according to claim 1, in which, in order to distinguish the suspected subscriber data records, which are possibly to be removed, from the other data records:
• all the subscriber data records, for which an activity (modification or reading) is in progress, are grouped in a special additional file;
• said data records are removed from said additional file when said activity on said data is completed.

4. Method according to claim 2 or 3, in which in case a system restart takes place during said activity, the suspected subscriber data records are removed from the Visitor Location Register.

5. Method according to claim 4, in which the suspected subscriber data records are then reloaded from a Home Location Register.

6. Method according to any of the preceding claims, whereby a subscriber data record for which an activity is in progress is a data record being modified.

7. Method according to any of the preceding claims, whereby a subscriber data record for which an activity is in progress is a data record being read.

8. Method according to any of the preceding claims to be used in a GSM or UMTS or GPRS network.

9. Computer program, which, when executed, is adapted to perform the steps of any of the methods of the claims 1 to 8.

10. A Visitor Location Register containing subscriber profile data, whereby the device is adapted for retaining said subscriber data after a system restart, whereby the Visitor Location Register comprises:
• means to distinguish subscriber data records for which an activity (modification or reading) is in progress (suspected data records) from the other data records, and
• means to remove only the suspected subscriber data records, from the Visitor Location Register after the system restart, while the means to remove retain all the other valid data records.

11. A Visitor Location Register according to claim 10, further comprising
• means for marking all subscriber data records for which an activity (modification or reading) is in progress;
• means for removing said marking when said activity is completed;

12. A Visitor Location Register according to claim 10, further comprising
• means for grouping all the subscriber data records, for which an activity (modification or reading) is in progress, in a special additional file;
• means for removing said data records from said additional file when said activity on said data is completed;

13. A Visitor Location Register according to claim 11 or 12, further comprising means for removing the suspected subscriber data records from the Visitor Location Register if a system restart take place during said activity.

14. A Visitor Location Register according to claim 13, further comprising means for reloading removed suspected subscriber data records.

15. Mobile Services Switching Center comprising a Visitor Location Register according to one of claims 10 to 14.

## Patentansprüche

1. Verfahren, das in einer Besucherdatei, die Teilnehmerprofildaten enthält, implementiert werden soll, zur Erhaltung der Teilnehmerdaten nach einem Wiederanlauf des Systems, **dadurch gekennzeichnet, dass** Teilnehmerdatensätze, für die eine Aktivität (Änderung oder Lesen) im Gange ist (verdächtigte Datensätze), von anderen Datensätzen unterschieden werden und dass nach dem Wiederanlauf des Systems nur die verdächtigten Teilnehmerdatensätze aus der Besucherdatei entfernt werden, während alle anderen gültigen Datensätze erhalten werden.

2. Verfahren nach Anspruch 1, bei dem, um die verdächtigten Teilnehmerdatensätze, die möglicherweise zu entfernen sind, von den anderen Datensätzen zu unterscheiden:
- ein Kennzeichnungsvorgang an allen Teilnehmerdatensätzen durchgeführt wird, für die eine Aktivität (Änderung oder Lesen) im Gange ist;
- die Kennzeichnung entfernt wird, wenn die Aktivität abgeschlossen ist.

3. Verfahren nach Anspruch 1, bei dem, um die verdächtigten Teilnehmerdatensätze, die möglicherweise zu entfernen sind, von den anderen Datensätzen zu unterscheiden:
- alle Teilnehmerdatensätze, für die eine Aktivität (Änderung oder Lesen) im Gange ist, in einer speziellen zusätzlichen Datei gruppiert werden;
- die Datensätze aus der zusätzlichen Datei entfernt werden, wenn die Aktivität an den Daten abgeschlossen ist.

4. Verfahren nach Anspruch 2 oder 3, bei dem in dem Fall, dass während der Aktivität ein Wiederanlauf des Systems erfolgt, die verdächtigten Teilnehmerdatensätze aus der Besucherdatei entfernt werden.

5. Verfahren nach Anspruch 4, bei dem die verdächtigten Teilnehmerdatensätze dann aus einer Heimatdatei neu geladen werden.

6. Verfahren nach einem der vorhergehenden Ansprüche, wobei ein Teilnehmerdatensatz, für den eine Aktivität im Gange ist, ein Datensatz ist, der geändert wird.

7. Verfahren nach einem der vorhergehenden Ansprüche, wobei ein Teilnehmerdatensatz, für den eine Aktivität im Gange ist, ein Datensatz ist, der gelesen wird.

8. Verfahren nach einem der vorhergehenden Ansprüche, das in einem GSM- oder UMTS- oder GPRS-Netz verwendet werden soll.

9. Computerprogramm, das dazu eingerichtet ist, bei Ausführung die Schritte ein beliebiges der Verfahren der Ansprüche 1 bis 8 durchzuführen.

10. Besucherdatei, die Teilnehmerprofildaten enthält, wobei die Vorrichtung zur Erhaltung der Teilnehmerdaten nach einem Wiederanlauf des Systems eingerichtet ist, wobei die Besucherdatei Folgendes umfasst:
- Mittel zum Unterscheiden von Teilnehmerdatensätzen, für die eine Aktivität (Änderung oder Lesen) im Gange ist (verdächtigte Datensätze), von den anderen Datensätzen und
- Mittel zum Entfernen nur der verdächtigten Teilnehmerdatensätze aus der Besucherdatei nach dem Wiederanlauf des Systems, während die Mittel zum Entfernen alle anderen gültigen Datensätze erhalten.

11. Besucherdatei nach Anspruch 10, die weiterhin Folgendes umfasst:
- Mittel zur Kennzeichnung aller Teilnehmerdatensätze, für die eine Aktivität (Änderung oder Lesen) im Gange ist;
- Mittel zur Entfernung der Kennzeichnung, wenn die Aktivität abgeschlossen ist.

12. Besucherdatei nach Anspruch 10, die weiterhin Folgendes umfasst:
- Mittel zur Gruppierung aller Teilnehmerdatensätze, für die eine Aktivität (Änderung oder Lesen) im Gange ist, in einer speziellen zusätzlichen Datei;
- Mittel zur Entfernung der Datensätze aus der zusätzlichen Datei, wenn die Aktivität an den Daten abgeschlossen ist.

13. Besucherdatei nach Anspruch 11 oder 12, die weiterhin Mittel zur Entfernung der verdächtigten Teilnehmerdatensätze aus der Besucherdatei, wenn während der Aktivität ein Wiederanlauf des Systems erfolgt, umfasst.

14. Besucherdatei nach Anspruch 13, die weiterhin Mittel zur Neuladung entfernter verdächtigter Teilnehmerdatensätze umfasst.

15. Mobilfunkvermittlungsstelle, die eine Besucherdatei nach einem der Ansprüche 10 bis 14 umfasst.

## Revendications

1. Procédé à implémenter dans un registre de localisation visiteur contenant des données de profil d'abonné, afin de retenir lesdites données d'abonné après un redémarrage du système, **caractérisé en ce que** les enregistrements de données d'abonné pour lesquels une activité (modification ou lecture) est en cours (enregistrements de données suspectés) sont distingués des autres enregistrements de données et **en ce que**, après le redémarrage du système, seuls les enregistrements de données d'abonné suspectés sont éliminés du registre de localisation visiteur, tout en retenant tous les autres enregistrements de données valides.

2. Procédé selon la revendication 1, dans lequel, afin de distinguer les enregistrements de données d'abonné suspectés, qui doivent éventuellement être éliminés, des autres enregistrements de données :
- Une procédure de marquage est effectuée sur tous les enregistrements de données d'abonné pour lesquels une activité (modification ou lecture) est en cours ;
- Ledit marquage est éliminé lorsque ladite activité prend fin.

3. Procédé selon la revendication 1, dans lequel, afin de distinguer les enregistrements de données d'abonné suspectés, qui doivent éventuellement être éliminés, des autres enregistrements de données :
- Tous les enregistrements de données d'abonné, pour lesquels une activité (modification ou lecture) est en cours, sont groupés dans un fichier additionnel spécial ;
- Lesdits enregistrements de données sont éliminés dudit fichier additionnel lorsque ladite activité sur lesdites données prend fin.

4. Procédé selon la revendication 2 ou 3, dans lequel, au cas où un redémarrage du système a lieu pendant ladite activité, les enregistrements de données d'abonné suspectés sont éliminés du registre de localisation visiteur.

5. Procédé selon la revendication 4, dans lequel les enregistrements de données d'abonné suspectés sont ensuite rechargés à partir d'un registre de localisation d'origine.

6. Procédé selon l'une quelconque des revendications précédentes, dans lequel un enregistrement de données d'abonné pour lequel une activité est en cours est un enregistrement de données étant modifié.

7. Procédé selon l'une quelconque des revendications précédentes, dans lequel un enregistrement de données d'abonné pour lequel une activité est en cours est un enregistrement de données étant lu.

8. Procédé selon l'une quelconque des revendications précédentes, à utiliser dans un réseau GSM ou UMTS ou GPRS.

9. Programme informatique, qui, lorsqu'il est exécuté, est adapté afin d'effectuer les étapes de l'un quelconque des procédés des revendications 1 à 8.

10. Registre de localisation visiteur contenant des données de profil d'abonné, moyennant quoi le dispositif est adapté afin de retenir lesdites données d'abonné après un redémarrage du système, moyennant quoi le registre de localisation visiteur comprend :
- Un moyen pour distinguer les enregistrements de données d'abonné pour lesquels une activité (modification ou lecture) est en cours (enregistrements de données suspectés) des autres enregistrements de données, et
- Un moyen pour éliminer uniquement les enregistrements de données d'abonné suspectés du registre de localisation visiteur après le redémarrage du système, alors que le moyen pour éliminer retient tous les autres enregistrements de données valides.

11. Registre de localisation visiteur selon la revendication 10, comprenant en outre
- Un moyen pour marquer tous les enregistrements de données d'abonné pour lesquels une activité (modification ou lecture) est en cours ;
- Un moyen pour éliminer ledit marquage lorsque ladite activité prend fin.

12. Registre de localisation visiteur selon la revendication 10, comprenant en outre
- Un moyen pour grouper tous les enregistrements de données d'abonné, pour lesquels une activité (modification ou lecture) est en cours, dans un fichier additionnel spécial ;
- Un moyen pour éliminer lesdits enregistrements de données dudit fichier additionnel lorsque ladite activité sur lesdites données prend fin.

13. Registre de localisation visiteur selon la revendication 11 ou 12, comprenant en outre un moyen pour éliminer les enregistrements de données d'abonné suspectés du registre de localisation visiteur si un redémarrage du système a lieu pendant ladite activité.

14. Registre de localisation visiteur selon la revendication 13, comprenant en outre un moyen pour recharger les enregistrements de données d'abonné suspectés éliminés.

15. Centre de commutation pour les services mobiles comprenant un registre de localisation visiteur selon une des revendications 10 à 14.
